# EUROPEAN PATENT APPLICATION

(11) **EP 2 028 088 A2**
(43) Date of publication of application: **25.02.2009**
(21) Application number: 08014783.8
(22) Date of filing: 20.08.2008
(51) Int. Cl.: B62J 23/00, B62K 25/08

(54) **Straddle-type vehicle**

(30) Priority: 20.08.2007 JP 2007214093
(71) Applicant: Yamaha Hatsudoki Kabushiki Kaisha, Iwata-shi, Shizuoka-ken 438-8501 (JP)
(72) Inventor: Saguchi, Hitochi, Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a straddle-type vehicle having at least one inverted fork (51,52) including an inner tube (51a,52a) that extends upward from a wheel axle (21) to which a wheel (20,30) of the straddle-type vehicle is attached, and an outer tube (51b,52b) that is connected to an upper section of the inner tube (51a,52a), wherein a fork protector (61,62) is provided with a first protector section (61a,62a) that covers the inner tube (51a,52a) with regard to a moving direction of the straddle-type vehicle at a front side of the inner tube and that extends in a length direction of the inner tube, and a second protector section (61b,62b) that extends from the first protector section as far as a rear side of the inner tube with regard to the moving direction of the straddle-type vehicle.

## Description

The present invention relates to a straddle-type vehicle equipped with a fork protector.

Straddle-type vehicles like motorcycles often use an inverted fork. The inverted fork has an inner tube that extends upward from a wheel axle to which a vehicle wheel is attached, and an outer tube that is connected to an upper section of the inner tube.

From Japanese Utility Model Registration No. 2547045 a straddle-type vehicle equipped with this type of inverted fork is known in which a fork protector is attached to a front surface and an outer side surface in the vehicle width direction of an inner tube. This fork protector can inhibit the front surface and the outer side surface in the vehicle width direction of the inner tube from being damaged by stones or the like that are thrown up by vehicles running in front.

However, even if the above-described fork protector is attached to the inverted fork, there are occasions when the inner tube is still damaged by stores or the like. To address this, the invention has been devised in light of the above-described problems.

It is an objective of the present invention to provide a straddle-type vehicle equipped with a fork protector that can inhibit an inverted fork from being damaged.

According to the present invention, said objective is solved by a straddle-type vehicle having at least one inverted fork including an inner tube that extends upward from a wheel axle to which a wheel of the straddle-type vehicle is attached, and an outer tube that is connected to an upper section of the inner tube, wherein a fork protector is provided with a first protector section that covers the inner tube with regard to a moving direction of the straddle-type vehicle at a front side of the inner tube and that extends in a length direction of the inner tube, and a second protector section that extends from the first protector section as far as a rear side of the inner tube with regard to the moving direction of the straddle-type vehicle.

Thus, the invention provides a straddle-type vehicle with a fork protector that can inhibit an inverted fork from being damaged.

Preferably, the second protector section extends from one end section of the first protector section in width direction of the straddle-type vehicle towards the rear side of the inner tube.

Further, preferably the wheel includes a tire, and the second protector section overlaps with the tire of the straddle-type vehicle.

Still further, preferably the second protector section extends towards an upper side from a center section of the first protector section in the length direction of the inner tube.

Yet further still, preferably the second protector section is positioned to leave a lower end section of the inner tube uncovered.

Preferably, the second protector section extends from one end section of the first protector section at a wheel side of the straddle-type vehicle as far as the rear side of the inner tube.

Further, preferably the second protector section extends as far as a center section of a rear surface of the inner tube.

According to a preferred embodiment, at least one of the upper end sections of the first protector section and the second protector section is/are provided with a notch between the fork and the wheel.

Preferably, a pair of inverted forks is connected by at least one bracket connecting the outer tubes of said pair of inverted forks.

Further, preferably a lower end section of the second protector section is slanted to face towards a front and lower side of a body of the straddle-type vehicle.

Still further, preferably the first protector section and the second protector section extend along an outer surface of the inner tube.

Yet further still, preferably the fork protector is connected to a lower end of the inner tube.

Preferably, the fork protector is a front fork protector covering the inner tube of a front fork supporting a front wheel of the straddle-type vehicle.

Further, preferably the fork protector is a rear fork protector covering the inner tube of a rear fork supporting a rear wheel of the straddle-type vehicle.

Still further, preferably the first protector section and the second protector section are formed integrally with each other.

In the following, the present invention is explained in greater detail by means of embodiments thereof in conjunction with the accompanying drawings, wherein:
- FIG. 1: is a left side view of a motorcycle according to an embodiment;
- FIG. 2: is a unit diagram of a fork protector 61 according to the embodiment;
- FIG. 3: is a unit diagram of a fork protector 62 according to the embodiment;
- FIG. 4: is a view along the direction of an arrow F1 shown in FIG. 1;
- FIG. 5: is an enlarged view of a left side surface of the motorcycle according to the embodiment;
- FIG. 6: is a cross sectional view along a C-C section shown in FIG. 5;
- FIG. 7: shows the movement of a stone thrown up by a front wheel 20 in the cross sectional view along the C-C section shown in FIG. 5; and
- FIG. 8: is an enlarged view of a left side surface of a motorcycle according to another embodiment.

Among others, the following reference signs are used in the figures:
- 10: Motorcycle
- 20: Front wheel
- 20a: Wheel
- 20b: Tire
- 21.: Wheel axle
- 30: Rear wheel
- 30a: Wheel
- 30b: Tire
- 31: Wheel axle
- 32: Rear arm
- 33: Pivot shaft
- 40: Engine
- 51, 52: Front forks
- 51a, 52a: Inner tubes
- 51b, 52b: Outer tubes
- 61, 62: Fork protector
- 61a: First protector section
- 61b: Second protector section
- 70: Under bracket
- 75: Upper bracket
- 80: Front fender
- 85: Steering handle
- 86: Brake caliper
- 87: Brake hose
- 90: Body frame
- 90hp: Head pipe
- 95: Steering shaft
- 100: Stay attachment member
- 110: Rivet
- 120: Round hole
- 130: Screw
- 140: Stay
- A: Notch
- B: Lower end section

Hereinafter, an embodiment of a straddle-type vehicle will be described with reference to the drawings. Note that, in the following drawings, structural members that are the same or similar are denoted with the same or similar reference numerals. Also note that the figures are schematic, and thus the reader should be aware that the relative scale of dimensions and the like may be different to the real object.

However, specific dimensions and the like can be determined based on reference to the following description. In addition, it will be readily apparent that the various figures include sections in which the relationship and scale of respective dimensions etc. are different.

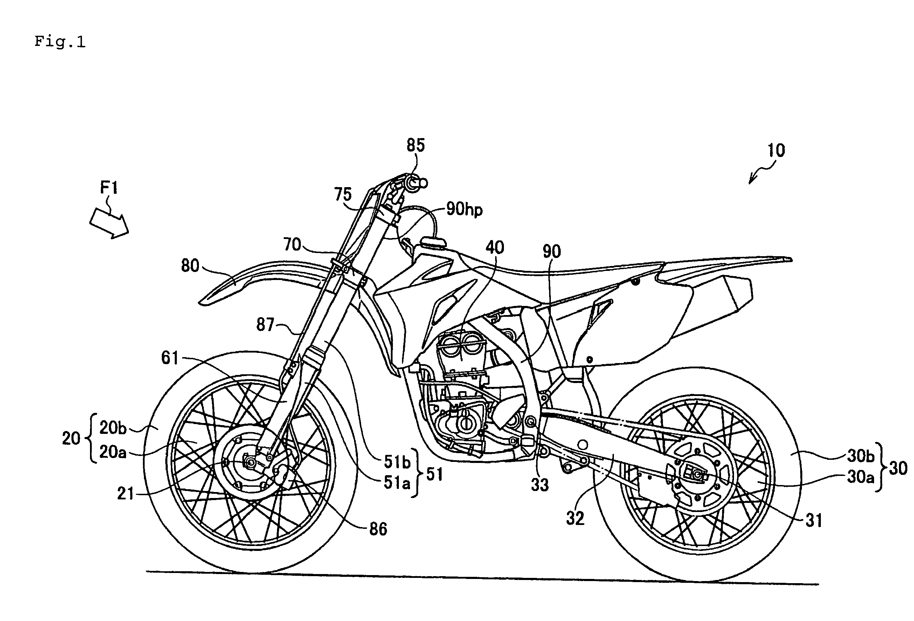

FIG. 1 is a left side view of a motorcycle 10 that is the straddle-type vehicle according to the embodiment. As shown in FIG. 1, the motorcycle 10 is a motorcycle that is suitable for driving along an uneven road. The motorcycle 10 includes a front wheel 20 and a rear wheel 30. An engine 40 generates driving force that drives the rear wheel 30. In general, a straddle-type vehicle has a body frame and a seat on which a rider can be seated straddling the body frame when being seated.

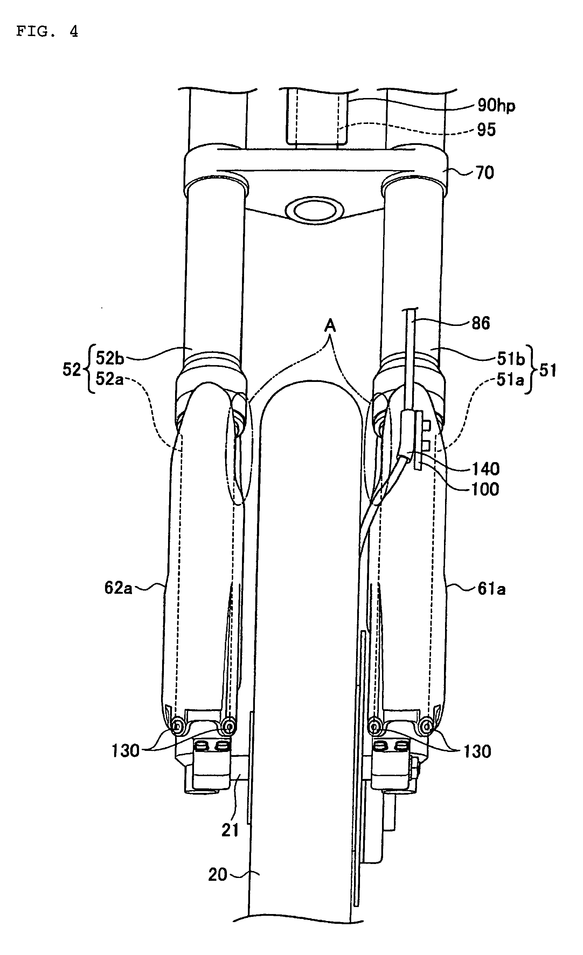

The front wheel 20 has a wheel 20a that is rotatably supported by a wheel axle 21, and a tire 20b that is attached to an outer periphery of the wheel 20a. A left and right pair of front forks 51, 52 are attached to both end sections in the vehicle width direction of the wheel axle 21 (the front fork 52 is not shown in FIG. 1; refer to FIG. 4).

The front forks 51, 52 move the front wheel 20 linearly upward and downward (more precisely, in a direction with a determined caster angle) in accordance with changes in a road surface condition such that the shock received by the front wheel 20 is absorbed.

As can be seen from FIG. 1, the front forks 51, 52 include inner tubes 51 a, 52a that extend upward from the wheel axle 21, and outer tubes 51 b, 52b in which the inner tubes 51a, 52a are inserted. More particularly, the front forks 51, 52 of this embodiment are inverted front forks.

The inner tubes 51 a, 52a and the outer tubes 51 b, 52b are both formed with a cylindrical shape. The inner tubes 51 a, 52a slidably move within the outer tubes 51 b, 52b. A seal is provided at the inside of the lower end of each of the outer tubes 51 b, 52b.

Fork protectors 61, 62 (only the fork protector 61 is shown in the figures) that inhibit the inner tubes 51a, 52a from being damaged are attached to the inner tubes 51 a, 52a. Next, the structure of the fork protectors 61, 62 will be explained.

Up-down direction center sections of the outer tubes 51 b, 52b are connected by an under bracket 70. A front fender 80 is attached to a vehicle width direction center section of the under bracket 70. The front fender 80 is disposed to extend around an outer periphery of the tire 20b at the upper side of the front wheel 20.

Upper end sections of the outer tubs 51 b, 52b are connected by an upper bracket 75. A steering handle 85 that is operated by the rider to change the direction of orientation of the vehicle body is attached to the upper bracket 75. A brake hose 87 runs from the steering handle 85 toward a brake caliper 86.

A body frame 90 forms the frame of the motorcycle 10. A head pipe 90hp is formed at the front end of the body frame 90. A steering shaft 95 (not shown in figure 1; refer to FIG. 4) is turnably supported by the head pipe 90hp.

The rear wheel 30 includes a wheel 30a that is turnably supported by a wheel axle 31, and a tire 30b that is attached to the outer periphery of the wheel 30a. The wheel axle 31 is attached to a rear end section of a rear arm 32. The rear arm 32 is swingably attached to a pivot shaft 33.

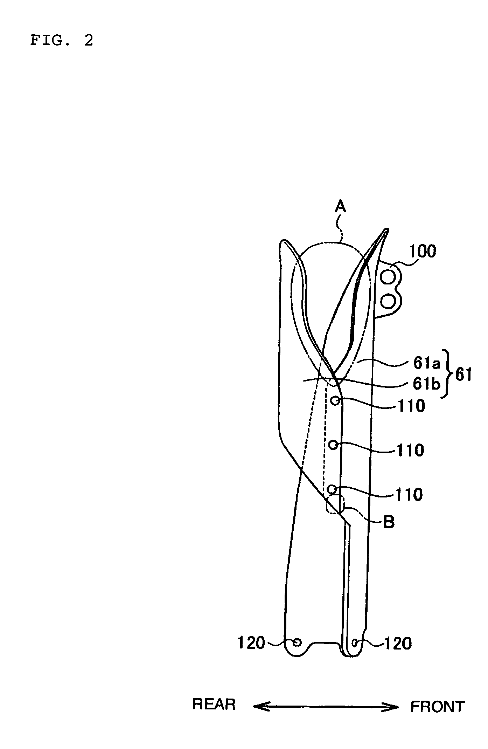

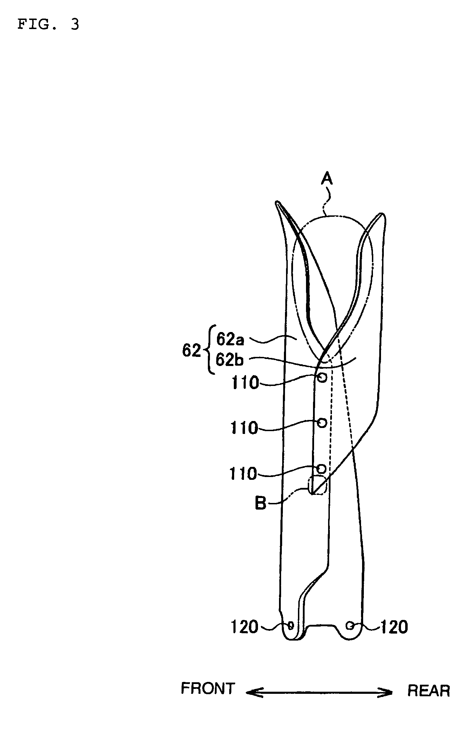

Next, the structure of the fork protectors 61, 62 will be explained with refer to FIG. 2 and FIG. 3. FIG. 2 is a unit diagram of the fork protector (left fork protector) 61. FIG. 3 is a unit diagram of the fork protector (right fork protector) 62.

As shown in FIG. 2 and FIG. 3, the fork protectors 61, 62 are formed to generally have left-right symmetry. As can be seen from FIG. 2, the fork protector 61 has a stay attachment member 100 that attaches a stay for fixing the brake hose 87.

The fork protectors 61, 62 have first protector sections 61a, 62a and second protector sections 61b, 62b.

The first protector sections 61a, 62a and the second protector sections 61b, 62b are connected by a rivet 110.

More particularly, the second protector sections 61b, 62b are connected at an upward-downward direction center section of one end section of the first protector sections 61a, 62a. When the fork protectors 61, 62 are attached to the motorcycle 10, the connection section of the first protector sections 61a, 62a and the second protector sections 61b, 62b is located at the inside in the vehicle width direction.

A notch A is formed in an upper end section of each of the fork protectors 61, 62. Round holes 120 are formed in lower end sections of the first protector sections 61 a, 62a. The round holes 120 are used to attach the fork protectors 61, 62 to the motorcycle 10. In addition, lower end sections B of the second protector sections 61 b, 62b are formed with an acute included angle.

Next, the attachment state of the above-described fork protectors 61, 62 will be explained with reference to FIG. 4 to FIG. 6. Note that, the explanation given below will mainly focus on the structure of the left side of the motorcycle 10. An explanation of the right side that has a structure that is substantially the same as that of the left side will be omitted as appropriate.

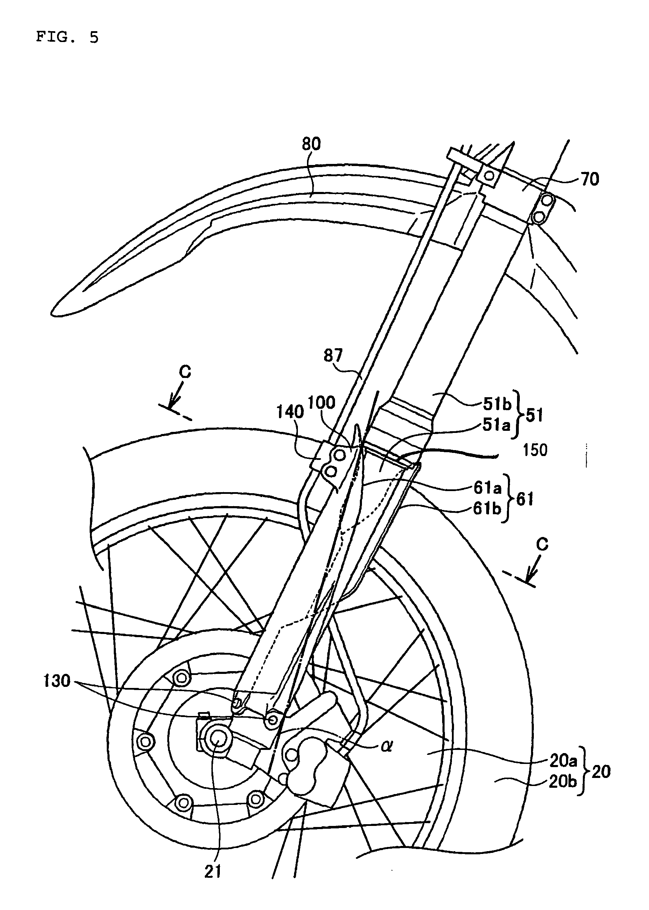

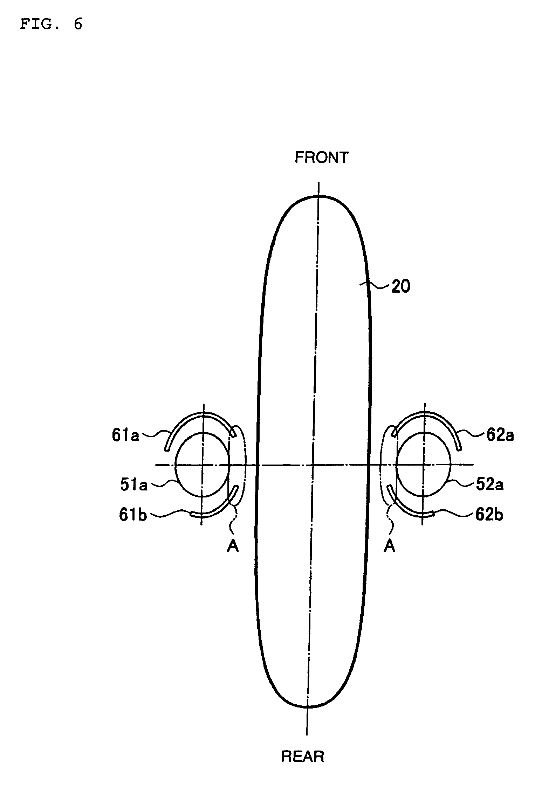

FIG. 4 is a view along the direction of the arrow F1 shown in FIG. 1. FIG. 5 is an enlarged left side view of the motorcycle 10. FIG. 6 is a cross sectional view along a C-C section shown in FIG. 5. Note that, in FIG. 4, in order to make the illustration of the structure of the fork protectors 61, 62 clearer, the front fender 80 is omitted.

As shown in FIG. 4, lower end sections of the inner tubes 51a, 52a are attached to vehicle width direction both end sections of the wheel axle 21. The inner tubes 51a, 52a extend upward from the wheel axle 21. The inner tubes 51 a, 52a are inserted inside the outer tubes 51 b, 52b. As can be seen from FIG. 5, a seal 150 is provided at the inside of the lower end of each of the outer tubes 51 b, 52b.

The outer tubes 51 b, 52b are connected by the under bracket 70. The steering shaft 95 extends upright from a vehicle width direction center section of the under bracket 70. The steering shaft 95 is supported by the head pipe 90hp such that the steering shaft 95 can turn centering on a central axis of the steering shaft 95.

The fork protectors 61, 62 are fixed to the lower end sections of the inner tubes 51 a, 52a. More specifically, the fork protectors 61, 62 are attached by inserting bolts 130 through the round holes 120 formed in the lower end sections of the first protector sections 61 a, 62a.

A stay 140 that fixes the brake hose 87 is attached to the stay attachment member 100 of the fork protector 61.

As shown in FIG. 4 and FIG. 5, the first protector section 61a covers the inner tube 51a at the front side of the inner tube 51 a. More particularly, the first protector section 61 a is positioned to the front side of the inner tube 51 a and extends in the length direction of the inner tube 51 a. The first protector section 61 a is formed to match the outer surface of the inner tube 51 a that is formed with a cylindrical shape.

In addition, the first protector section 61a, as shown in FIG. 5, extends toward the outside in the vehicle width direction of the inner tube 51a. More particularly, the first protector section 61a covers, within the surface at the outside in the vehicle width direction of the inner tube 51 a, an area forward of a line α that connects a lower end rear section of the inner tube 51 a and a lower end front section of the outer tube 51 b.

The second protector section 61 b is connected to one end section at the inside in the vehicle width direction of the first protector section 61 a by the rivet 110. The second protector section 61 b is formed to match the outer surface of the inner tube 51 a that is formed with a cylindrical shape.

The second protector section 61 b is positioned further upward than a center section in the length direction of the inner tube 51 a. Furthermore, the second protector section 61 b is positioned further upward than the lower end section of the inner tube 51 a. Thus, a rear section of the lower end of the inner tube 51 a is not covered by the second protector section 61 b, and is exposed to the outside.

Note that, as shown in FIG. 5, the front wheel 20 includes the wheel 20a that is turnably supported by the wheel axle 21, and the tire 20b that is attached to the outer periphery of the wheel 20a. The upper end section of the inner tube 51 a, when seen in a side view of the vehicle body, overlaps with the tire 20b. The upper end section of the second protector section 61 b, when seen in a side view of the vehicle body, overlaps with the tire 20b. In other words, the upper end section of the inner tube 51a and the upper end section of the second protector section 61 b are positioned to the outside of the outer periphery of the tire 20b.

In addition, the second protector section 61 b extends from one end section at the front wheel 20 side of the first protector section 61 a to the rear of the inner tube 51 a. More particularly, as shown in FIG. 6, the second protector section 61 b extends, within the rear surface of the inner tube 51 a, as far as a vehicle width direction center section.

Moreover, as shown in FIG. 6, the notch A is formed in the upper end section of each of the fork protectors 61, 62 between the front forks 51, 52 and the front wheel 20.

In known art, even though the fork protector is attached to the front surface and the vehicle width direction outer side surface of the inner tube, the inner tube may still be damaged.

It has been observed that this damage of the inner tube is caused by stones or the like thrown up by rotation of the vehicle wheels. In addition, it has been found out that a large proportion of the damage of the rear surface of the inner tube occurs at the position where the inner tube overlaps with the vehicle wheel when the vehicle body is seen from the side.

To address this, the fork protectors 61, 62 of the embodiment are provided with the first protector sections 61 a, 62a and the second protector sections 61 b, 62b. The first protector sections 61 a, 62a cover the inner tubes 51 a, 52a at the front side of the inner tubes 51 a, 52a, and extend in the length direction of the inner tubes 51 a, 52a. The second protector sections 61 b, 62b extend from the one end section at the front wheel 20 side of the first protector sections 61 a, 62a to the rear side of the inner tubes 51 a, 52a.

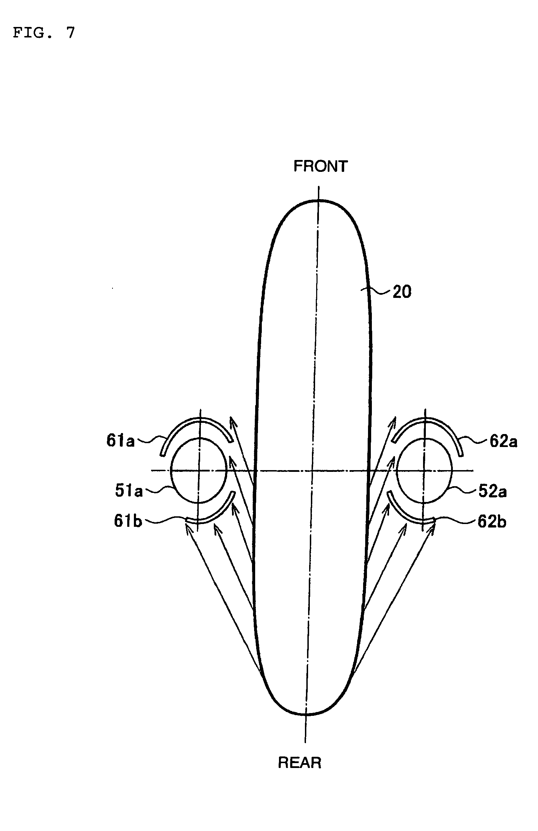

As a result, as shown in FIG. 7, stones etc. that are thrown up by rotation of the front wheel 20 and fly toward the inner tubes 51 a, 52a from the vehicle body rear direction are knocked away by the second protector sections 61 b, 62b. Thus, the rear surfaces of the inner tubes 51a, 52a can be inhibited from being damaged.

Moreover, stones etc. that are thrown up by vehicles running in front and fly toward the inner tubes 51a, 52a from the vehicle body front direction are knocked away by the first protector sections 61 a, 62a. Thus, the front surfaces of the inner tubes 51a, 52a can be inhibited from being damaged.

In this manner, the fork protectors 61, 62 can inhibit the inverted fork from being damaged. As a result, the durable life of the front forks 51, 52 can be lengthened, and the physical effort and expense required for replacing the front forks can be reduced.

In addition, the second protector sections 61 b, 62b according to the embodiment, when viewed from the side of the vehicle, overlap with the tire 20b. Thus, the second protector sections 61 b, 62b can effectively protect the area within the rear surface of the inner tubes 51 a, 52a that is most easily damaged.

Furthermore, the second protector sections 61 b, 62b according to the embodiment are positioned to the upper side of the center sections in the length direction of the inner tubes 51a, 52a. Accordingly, the sections that frequently slide within the outer tubes 51 b, 52b of the inner tubes 51 a, 52a can be effectively protected. Thus, it is possible to inhibit the seal 150 from being damaged as a result of the inner tubes 51 a, 52a being damaged.

Furthermore, the second protector sections 61 b, 62b according to the embodiment are positioned to the upper side of the lower end sections of the inner tubes 51 a, 52a. In this manner, the lower end sections of the inner tubes 51a, 52a are not covered by the second protector sections 61 b, 62b. Thus, dirt and sand that enter into the gap between the inner tubes 51 a, 52a and the fork protectors 61, 62 can easily escape.

In addition, the second protector sections 61 b, 62b according to the embodiment extend from the one end section at the front wheel 20 side of the first protector sections 61a, 62a as far as the rear of the inner tubes 51a, 52a. Accordingly, as shown in FIG. 7, it is possible to reliably protect the vehicle width direction inner side sections of the rear surfaces of the inner tubes 51 a, 52a.

In addition, the second protector sections 61 b, 62b according to the embodiment extend as far as the vehicle width direction center sections of the rear surfaces of the inner tubes 51a, 52a. As a result, as shown in FIG.7, it is possible to reliably protect the vehicle width direction outer side section of the rear surface of the inner tubes 51a, 52a.

Moreover, the upper end sections of the fork protectors 61, 62 according to the embodiment are provided with the notch A between the front forks 51, 52 and the front wheel 20. As a result, when the under bracket 70 and the front fender 80 move downwards, interference of the under bracket 70 and the front fender 80 with the fork protectors 61, 62 can be avoided.

Moreover, the lower end sections B of the second protector sections 61 b, 62b according to the embodiment are formed with an acute angle. Thus, as compared to if the lower end sections of the second protector sections 61 b, 62b are formed in a rectangular shape, the manufacturing cost of the second protector sections 61 b, 62b can be reduced and weight reduction promoted.

In addition, the first protector sections 61 a, 62a and the second protector sections 61 b, 62b according to the embodiment extend along the outer surfaces of the inner tubes 51 a, 52a. As a result, the inner tubes 51 a, 52a can be disposed in a compact manner.

Hereinabove, one embodiment is described to disclose the features. However, it is to be understood that the teaching is not limited by the description and the drawings that constitute one section of the disclosure. From the disclosure, it will be obviously apparent to those skilled in the art that the teaching permits various modified forms.

For example, in the explanation of the above described embodiment the fork protectors 61, 62 are attached to the front forks 51, 52. However, if a rear fork is connected to the rear wheel 30, the fork protectors 61, 62 may be attached to the rear fork.

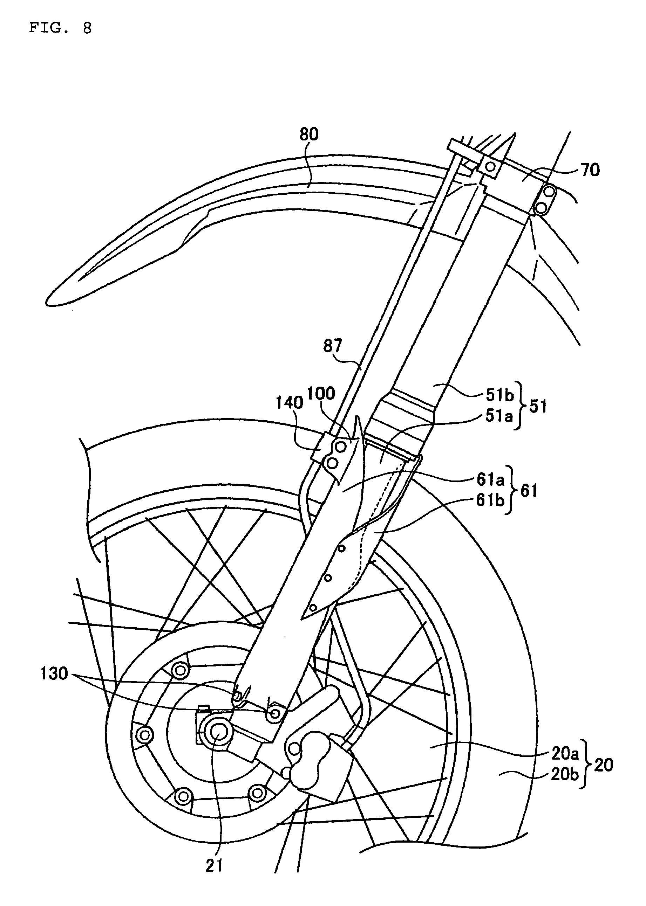

Moreover, in the above-described embodiment, the second protector sections 61 b, 62b are connected to the one end section of the first protector sections 61 a, 62a at the front wheel 20 side. However, as shown in FIG. 8, the second protector sections 61 b, 62b may be connected to one end section at the vehicle width direction outer side of the first protector sections 61 a, 62a.

Moreover, in the above-described embodiment, the notch A is formed in the first protector sections 61 a, 62a and the second protector sections 61 b, 62b. However, the notch A may be formed in either one of the members.

Moreover, in the above-described embodiment, the first protector sections 61 a, 62a and the second protector sections 61 b, 62b are formed as separate members, but they may be integrated.

As will be readily apparent, the teaching includes also combinations of the embodiments and features described above.

The description above discloses (among others) an embodiment of a fork protector that is attached to an inverted fork including an inner tube that extends upward from a wheel axle to which a vehicle wheel of a straddle-type vehicle is attached, and an outer tube that is connected to an upper section of the inner tube, the fork protector characterized by comprising: a first protector section that covers the inner tube at the front side of the inner tube and that extends in a length direction of the inner tube; and a second protector section that extends from one end section in a vehicle width direction of the first protector section as far as the rear side of the inner tube.

Preferably, the vehicle wheel includes a wheel that is rotatably supported by the vehicle axle, and a tire that is attached to an outer periphery of the wheel, and the second protector section, when viewed from a side of a vehicle body, overlaps with the tire.

Further, preferably the second protector section is positioned to the upper side of a center section in the length direction of the inner tube.

Further, preferably the second protector section is positioned to the upper side of a lower end section of the inner tube.

Further, preferably the second protector section extends from one end section at the vehicle wheel side of the first protector section as far as the rear side of the inner tube.

Further, preferably the second protector section extends as far as a vehicle width direction center section of a rear surface of the inner tube.

Further, preferably the straddle-type vehicle further includes a steering shaft, and an under bracket that supports a lower end of the steering shaft, wherein at least one of upper end sections of the first protector section and the second protector section are provided with a notch between the fork and the vehicle wheel.

Further, preferably a lower end section of the second protector section is slanted to face toward the front and lower of the vehicle body.

Further, preferably the first protector section and the second protector section extend along an outer surface of the inner tube.

Also, an embodiment of a straddle-type vehicle is disclosed including an inverted fork having an inner tube that extends upward from a wheel axle to which a vehicle wheel is attached, and an outer tube that is connected to an upper section of the inner tube, the straddle-type vehicle being characterized in that the fork protector includes a first protector section that covers the inner tube at the front side of the inner tube and that extends in a length direction of the inner tube; and a second protector section that extends from one end section in a vehicle width direction of the first protector section as far as the rear side of the inner tube.

Preferably, a fork protector according to any one of the embodiments above is included.

In order to provide a fork protector that can inhibit an inverted fork from being damaged, and a straddle-type vehicle equipped with the fork protector, the following is preferably suggested:

Fork protectors 61, 62 include: first protector sections 61 a, 62a that cover inner tubes 51 a, 52a at the front side of the inner tubes 51 a, 52a, and that extend in a length direction of the inner tubes 51 a, 52a; and second protector sections 61 b, 62b that extend from one end section at a front wheel 20 side of the first protector sections 61 a, 62a as far as a rear side of the inner tubes 51 a, 52a.

## Claims

1. Straddle-type vehicle having at least one inverted fork (51, 52) including an inner tube (51 a, 52a) that extends upward from a wheel axle (21) to which a wheel (20, 30) of the straddle-type vehicle is attached, and an outer tube (51 b, 52b) that is connected to an upper section of the inner tube (51 a, 52a), wherein a fork protector (61, 62) is provided with a first protector section (61 a, 62a) that covers the inner tube (51a, 52a) with regard to a moving direction of the straddle-type vehicle at a front side of the inner tube (51a, 52a) and that extends in a length direction of the inner tube (51 a, 52a), and a second protector section (61 b, 62b) that extends from the first protector section (61 a, 62a) as far as a rear side of the inner tube (51 a, 52a) with regard to the moving direction of the straddle-type vehicle.

2. Straddle-type vehicle according to claim 1, wherein the second protector section (61 b, 62b) extends from one end section of the first protector section (61 a, 62a) in width direction of the straddle-type vehicle towards the rear side of the inner tube (51 a, 52a).

3. Straddle-type vehicle according to claim 1 or 2, wherein the wheel (20, 30) includes a tire (20b, 30b), and the second protector section (61 b, 62b) overlaps with the tire (20b, 30b) of the straddle-type vehicle.

4. Straddle-type vehicle according to one of claims 1 to 3, wherein the second protector section (61 b, 62b) extends towards an upper side from a center section of the first protector section (61 a, 62a) in the length direction of the inner tube (51 a, 52a).

5. Straddle-type vehicle according to one of claims 1 to 4, wherein the second protector section (61 b, 62b) is positioned to leave a lower end section of the inner tube (51 a, 52a) uncovered.

6. Straddle-type vehicle according to one of claims 1 to 5, wherein the second protector section (61 b, 62b) extends from one end section of the first protector section (61 a, 62a) at a wheel side of the straddle-type vehicle as far as the rear side of the inner tube (51 a, 52a).

7. Straddle-type vehicle according to according to one of claims 1 to 6, wherein the second protector section (61 b, 62b) extends as far as a center section of a rear surface of the inner tube (51 a, 52a).

8. Straddle-type vehicle according to one of claims 1 to 7, wherein at least one of the upper end sections of the first protector section (61 a, 62a) and the second protector section (61 b, 62b) is/are provided with a notch (A) between the fork and the wheel (20, 30).

9. Straddle-type vehicle according to one of claims 1 to 8, wherein a pair of inverted forks (51, 52) is connected by at least one bracket (70, 75) connecting the outer tubes (51b, 52b) of said pair of inverted forks (51, 52).

10. Straddle-type vehicle according to one of claims 1 to 9, wherein a lower end section of the second protector section (61 b, 62b) is slanted to face towards a front and lower side of a body of the straddle-type vehicle.

11. Straddle-type vehicle according to one of claims 1 to 10, wherein the first protector section (61 a, 62a) and the second protector section (61 b, 62b) extend along an outer surface of the inner tube (51 a, 52a).

12. Straddle-type vehicle according to one of claims 1 to 11, wherein the fork protector (61, 62) is connected to a lower end of the inner tube (51a, 52a).

13. Straddle-type vehicle according to one of claims 1 to 12, wherein the fork protector (61, 62) is a front fork protector covering the inner tube of a front fork supporting a front wheel (20) of the straddle-type vehicle.

14. Straddle-type vehicle according to one of claims 1 to 12, wherein the fork protector (61, 62) is a rear fork protector covering the inner tube of a rear fork supporting a rear wheel (30) of the straddle-type vehicle.

15. Straddle-type vehicle according to one of claims 1 to 14, wherein the first protector section (61 a, 62a) and the second protector section (61 b, 62b) are formed integrally with each other.
